# EUROPEAN PATENT APPLICATION

(11) **EP 0 970 846 A1**
(43) Date of publication of application: **12.01.2000**
(21) Application number: 98830415.0
(22) Date of filing: 09.07.1998
(51) Int. Cl.: B60N 2/48

(54) **A headrest for motor-vehicle**

(71) Applicant: GESTIND-M.B." MANIFATTURA DI BRUZOLO" S.P.A, I-10050 Bruzolo (Torino) (IT)
(72) Inventor: De Filippo, Emilio, 10050 Bruzolo (Torino) (IT)
(74) Representative: Prato, Roberto

(57) **Abstract**

Headrest (1) for motor-vehicle seats in which the positioning notches (7) of the support rods (4) for height adjustment of the headrest (1) cooperate with a pair of arms (28) carried by a slider member (15) is movable, in a direction perpendicular to the support rods (4), between an engaged position and an disengaged position, within an intermediate hollow body (10) swingably supporting the load-bearing framework (3) of the headrest (1). Between the slider member (15) and the load-bearing framework (3) angular positioning members (18,20) are provided to adjust tilt of the yelding body (2) relative to the support rods (4).

## Description

The present invention is related to headrests for motor-vehicle seats, comprising a yelding body incorporating a load-bearing framework, a pair of parallel support rods slidably coupled with said load-bearing framework and projecting outside of the yelding body, locking means adapted to engage corresponding positioning notches of the support rods to prevent relative displacement between said support rods and said load-bearing framework, and manually operable release means of said locking means.

In the known headrests of the above-referenced type the locking means and the release means enable, in use, adjusting the height position of the headrest relative to the backrest of a motor-vehicle seat on which the headrest is applied.

The object of the present invention is to provide a headrest of the type set forth in the beginning which on one hand ensures convenient and functional adjustment of the headrest height positioning, and on the other hand enables in an equally simple and efficient way adjusting also the angular positioning of the yelding body relative to the support rods.

A further object of the invention is to provide a headrest of the above-referenced type in which a single manually operable control member enables to selectively adjust either the height or the angular position of the yelding body, or even both.

According to the invention these objects are achieved by a headrest for motor-vehicles seats of the type set forth in the beginning, the primary feature of which resides in that:
- the locking means are carried by a slider member displaceable in said load-bearing framework in a direction perpendicular to said support rods from an engaged position to a disengaged position relative to said positioning notches of the support rods, against the action of resilient thrust means,
- said yelding body is swingable relative to said slider member, and between said load-bearing framework and said slider member releasable angular positioning means are provided to adjust tilt of said yelding body relative to the support rods.

According to a preferred embodiment of the invention said angular positioning means can be disengaged by means of said manually operable release means.

The angular positioning means conveniently comprise at least one tooth projection extending laterally of said slider member and at least one series of complementary seats formed in a fan-like fashion in the load-bearing framework and selectively engageable by said tooth projection.

In a preferred embodiment of the invention between said load-bearing framework and said slider member an intermediate hollow body is interposed on which said load-bearing framework is tiltably mounted; said intermadiate hollow body slidably supporting said slider member, being slidably mounted on said support rods and being passed through by said at least one tooth projection of the slide member.

The invention will now be disclosed in detail with reference to the accompanying drawings, purely provided by way of non limiting example, in which:
Figure 1 is a partially sectioned front elevational view of a headrest for motor-vehicle seats according to the invention,
Figure 2 is a horizontally sectioned view along line II-II of figure 1 in a first condition of the headrest,
Figure 3 is a view same as figure 2 in a second condition of the headrest,
Figure 4 is a vertically sectioned view along line IV-IV of figure 4 in a first angularly adjusted condition of the headrest,
Figure 5 is a view same as figure 4 showing the headrest in a second angularly adjusted condition,

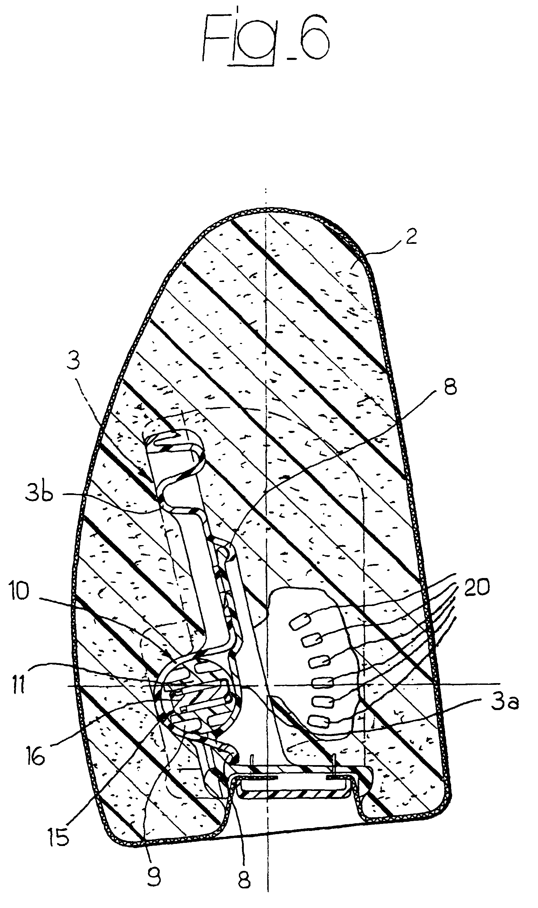

Figure 6 is a vertically sectioned view according line VI-VI of figure 1, and
Figure 7 is a perspective exploded view of a detail of the headrest according to the invention.

In the drawings, reference numeral 1 generally designates a headrest for motor-vehicles, essentially formed by a yelding body or cushion 2, normally made of foamed plastic material, incorporating a load-bearing framework 3 normally made of rigid moulded plastic material, and a pair of support rods 4 parallel to each other and on which the load-bearing framework 3 is coupled, such as clarified herebelow, in a slidable and swinging fashion. This coupling enables, in use, adjustment both of the height positioning and of the angular positioning of the cushion 2 relative to the top of the backrest of a motor-vehicle seat on which the head rest 1 is installed.

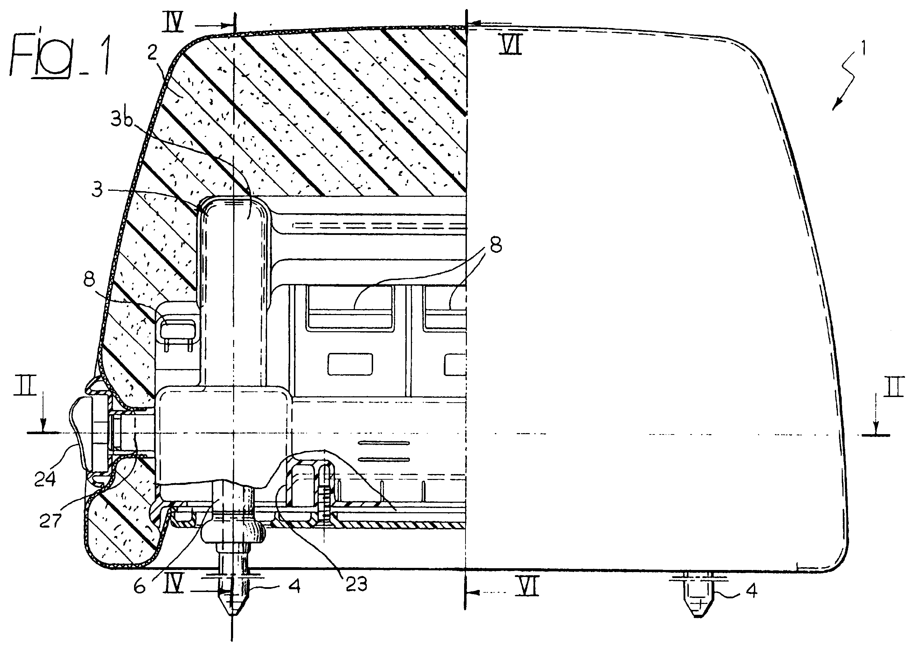

The support rods 4 each include a lower portion 5, intended to be rigidly connected to the structure of the seat backrest, in a known way, and an upper portion 6 which, in the case of the shown example, forms an angle with the lower portion 5. The upper portion 6 of each support rod 4 conveniently comprises a metal core 6a on which a rigid plastic material lining 6b is overmoulded. In alternative, each support road 4 may be fully metallic. In any case, the upper portion 6 of each support road 4 is provided along one side thereof with a respective vertical row of positioning notches 7 having preferably a quadrangular cross-section. The notches 7 of the two support rods 4 are both facing towards the same side, i.e. to the right with reference to figures 1 through 3.

The load-bearing framework 3 is formed by two half-shells 3a, 3b joined to each other by means of integral snap-fit coupling members generally designated as 8, and define therebetween a central tubular housing 9.

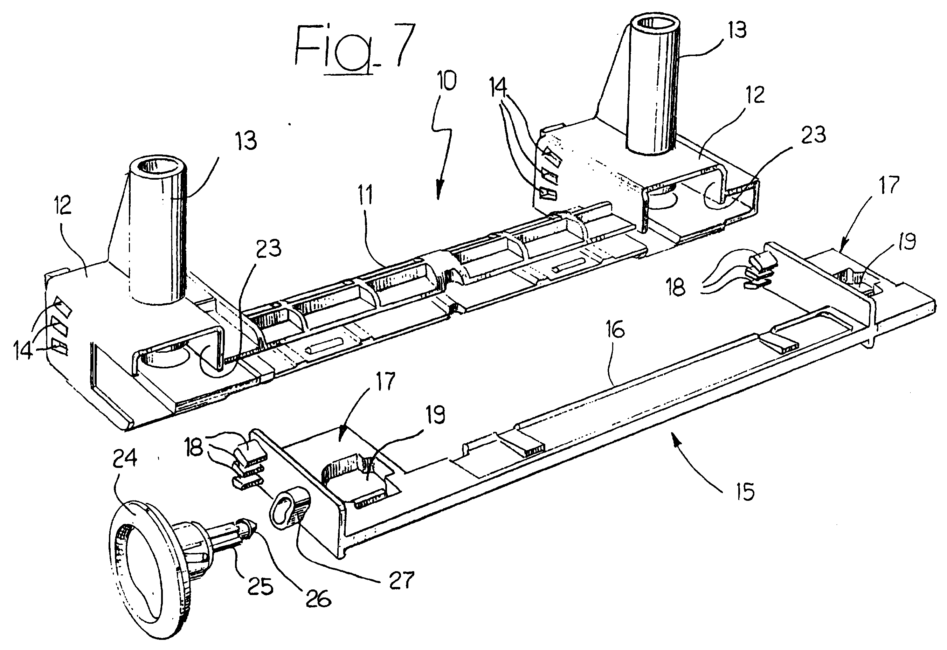

Reference numeral 10 designates an intermediate hollow body, also made of moulded plastic material, fitted between the half-shells 3a, 3b of the load-bearing framework 3. As shown in detail in figure 7, the intermediate hollow body 10 comprises a central elongated portion 11 having a rounded outer surface and a shape complementary to that of the central housing 9, and two box-like enlarged end portions 12 each formed with a respective upper tubular guide appendage 13 into which the upper portion 6 of a respective support rod 4 is slidably fitted.

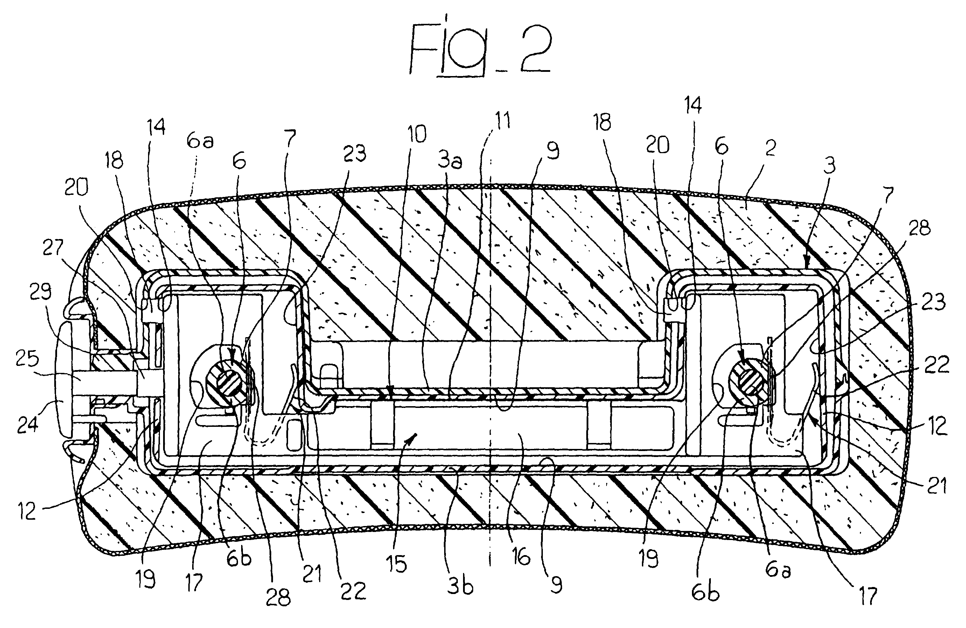

The lateral walls facing towards the same side, namely to the left with reference to figures 2,3 and 7, of the box-like end portions 12 are formed with respective series of through openings 14 (in the shown example three of these openings are provided) arranged in a fan-like fashion.

The intermediate hollow body 10 is open at the front so as to enable, during assembling, fitting thereinto a slider member 15, also formed by one rigid moulded plastic material piece, which is movable perpendicularly to the support rods 4, such as clarified herebelow.

As also illustrated in detail in figure 7, the slider member 15 comprises an elongated central portion 16 housed within the central portion 11 of the intermediate hollow body 10, and two enlarged end portions 17 fitted within the box-like ends 12 of the intermediate body 10.

The enlarged end portions 17 are formed on the same side, namely the left side with reference to figures 2,3 and 7, with respective series of tooth projections 18 complementary to the through openings 14 and facing towards these openings. Moreover the enlarged ends 17 are formed with respective apertures 19, corresponding to the tubular guide appendages 13 of the intermediate body 10 and, in the assembled condition, are passed through by the upper portions of the support rods 4.

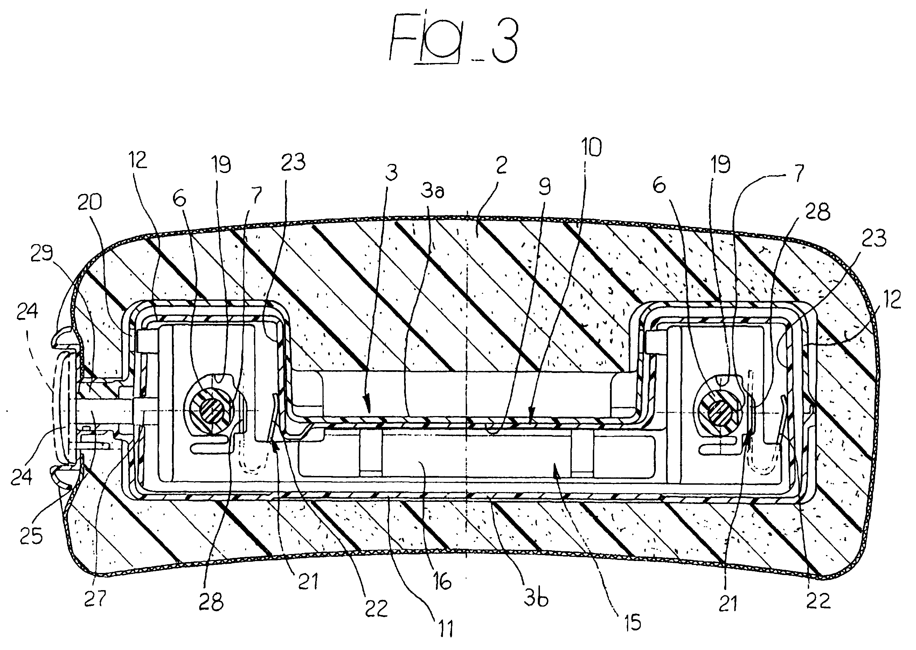

The slider member 15 is slidably mounted within the intermediate body 10 between an advanced position shown in figure 2, in which the tooth appendages 18 pass through the openings 14 and project outside thereof, and a retracted position depicted in figure 3, in which the tooth appendages 18 substantially do not project outside of the openings 14. In either position the tooth appendages 18 do engage and, respectively, do not engage corresponding seats or openings of two fanlike series 20, formed in the corresponding lateral walls of the half-shell 3a of the load-bearing framework 3.

Reference numerals 21 designate two metal V-shaped wire springs having respective springing arms 22 reacting against corresponding reaction surfaces 23 of the box-like ends 12 of the intermediate body 10, opposite to the through openings 14. Each wire spring 21 is provided with a further arm 28 which is rigidly fixed to the slider member 15 so as to have a central portion exposed along the corresponding aperture 19, such as clearly depicted in figures 2 and 3. These exposed central portions of the arms 28 are designed to engage the notches 7 of the upper portions 6 of the two support rods 4 in the way shown in figure 2, i.e. when the slider member 15 is placed in the advanced position. The springing arms 22 of the wire springs 21 act as thrust resilient elements intended to hold the slider member 15 in this advanced position, whereby relative displacement between the load-bearing framework 3 with the yelding body 2 and the support rods 4 is prevented. Moreover, in this advanced position of the slider member 15 any angular displacement of the load-bearing framework 3 with the yelding body 2 relative to the supports rods 4 is also prevented by engagement of the tooth appendages 18 of the slider member 15 within corresponding seats of the two fan-like series 20 of the half-shell 3a, across the through openings 14 of the intermediate body 10.

Reference numeral 24 designates a control member formed as a manually operable push-button arranged at one side of the yelding body 2 of the headrest 1 and rigidly connected to a stem 25 which is extending along a hollow guide appendage 29 of the load-bearing framework 3 and whose free end 26 is engaged, by means of a snap-fit coupling, within a slotted lateral appendage 27 of the slider member 15.

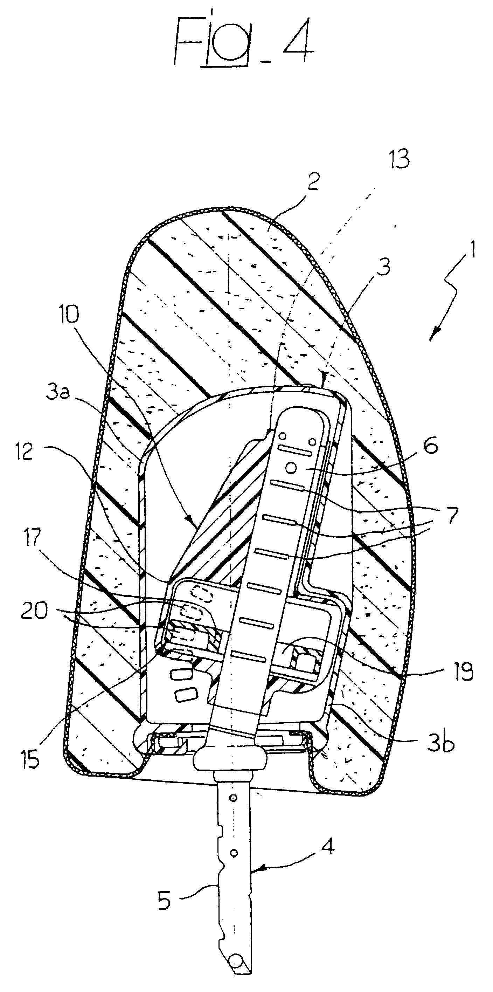

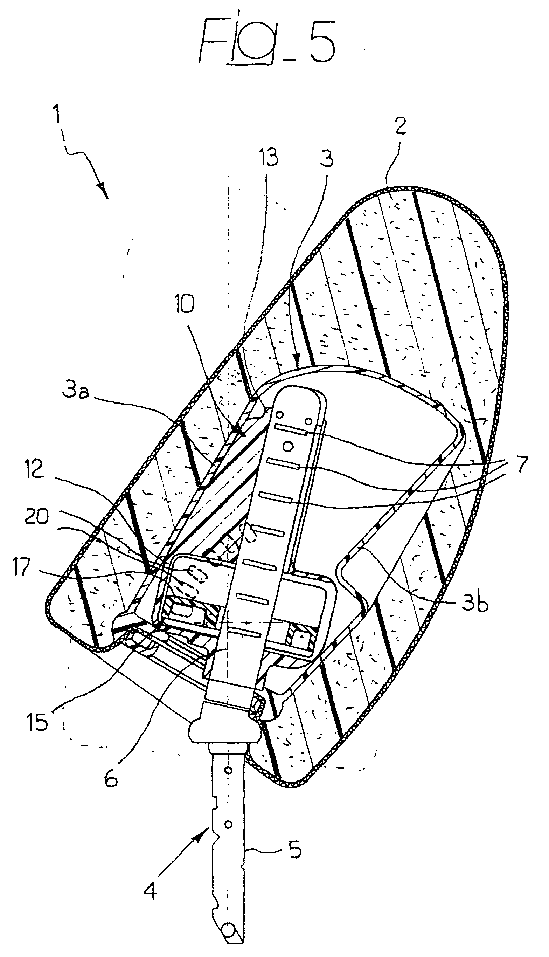

The control push-button 24 can be operated from outside to displace the slider member 15 from the advanced position of figure 2 to the retracted position of figure 3, in which as already pointed out it is displaced to the right with reference to that figure, against the action of the springing arms 22 of the wire springs 21. Owing to this displacement firstly the locking arms 28 are withdrawn from the notches 7 of the support rods 4, whereby the yelding body 2 can be moved upwardly or downwardly, by virtue of sliding of the tubular guides 13 of the intermediate body 10, and thus of the load-bearing framework 3, along the upper portions 6 of the supports rods 4, to perform height adjustment of the headrest relative to the backrest of a motor-vehicle seat. Then, a further retraction of the slider member 15 relative to the intermediate body 10 causes disengagement of the tooth appendages 18 from the seats 20 of the half-shell 3a of the load-bearing framework 3, which enables the latter, together with the yelding body 2, to be angularly displaced relative to the assembly formed by the support rods 4, the slider member 15 and the intermediate body 10. This tilting motion, allowed by the rotatable coupling between the central portion 11 of the intermediate body 10 and the central housing 9 of the load-bearing framework 3, enables adjusting the tilt of the yelding body 2 relative to the seat backrest, between the two end positions depicted in figures 4 and 5, respectively.

Upon release of the push-button 24, the springing arms 22 of the wire springs 21 move the slider member 15 back to the advanced position, thus performing firstly engagement between the tooth appendages 18 and the corresponding openings of the two fan-like series 20, and subsequently engagement of the arms 28 into the corresponding positioning notches 7 of the support rods 4.

It will be apparent from the forgoing that the locking and unlocking operation between the yelding body 2 and the support rods 4, and accordingly both the height adjustment and the tilt adjustment of the yelding body 2, are made extremely convenient and easy since requiring operation of a single control member, namely the push-button 24.

In case the user intends only to adjust the height of the yelding body 2, without changing the angular positioning thereof, it will be sufficient to push only partially, instead of fully, the push-button 24 to the position shown with dotted lines in figure 3. In that case the locking arms 28 of the springs 21 shall be disengaged from the related notches 7 of the support rods 4, but the tooth projections 18 shall not be disengaged from the related series of fan-like openings 20, thus releasing upward or downward displacement of the yelding body 2 but not tilting thereof. To make selection by the user of one or the other adjustment mode easier, positioning means may be provided, for instance of the elastic snap-fit type, to releasably stop the stem 25 of the push-button 24 in a partially advanced and, respectively, in a fully advanced position.

It is to be pointed out that the push-button 24 may be replaced by a different control member, such as for instance a rotary knob or a swinging lever.

Naturally, the details of construction and the embodiments may be widely varied with respect to what has been disclosed and illustrated, without thereby departing from the scope of the present invention such as defined in the appended claims.

## Claims

1. Headrest (1) for motor-vehicles seats, comprising a yelding body (2) incorporating a load-bearing framework (3), a pair of parallel support rods (4) slidably coupled with said load-bearing framework (3) and projecting outside of said yelding body (2), locking means (28) adapted to engage corresponding positioning notches (7) of said support rods (4) to prevent relative displacement between said support rods (4) and said load-bearing framework (3), and manually operable release means (15,24) of said locking means (28), characterised in that:
- the locking means (28) are carried by a slider member (15) displaceable in said load-bearing framework (3) in a direction perpendicular to said support rods (4) from an engaged position to a disengaged position relative to said positioning notches (7) of the support rods (4), against the action of resilient thrust means (22),
- said yelding body (2) is swingable relative to said slider member (15), and between said load-bearing framework (3) and said slider member (15) releasable angular positioning means (18,20) are provided to adjust tilt of said yelding body (2) relative to said support rods (4).

2. Headrest according to claim 1, characterised in that said angular positioning means (18,20) can be disengaged by said manually operable release means (15, 24).

3. Headrest according to claim 1, characterised in that said angular positioning means comprise at least one tooth projection (18) extending laterally of said slider member (15) and at least one series of complementary seats arranged in a fan-like fashion (20) in said load-bearing framework (3) and selectively engageable by said at least one tooth projection (18).

4. Headrest according to claim 3, characterised in that between said load-bearing framework (3) and said slider member (15) an intermediate hollow body (10) is interposed on which said load-bearing framework (3) is tiltably mounted; said intermediate hollow body (10) slidably supporting said slider member (15), being slidably mounted on said support rods (4), and being passed through by said at least one tooth appendage (18) of said slider member (15).

5. Headrest according to claim 4, characterised in that said intermediate hollow body (10) is formed with a pair of tubular guide appendages (13) for said support rods (4).

6. Headrest according to claim 2, characterised in that said release means comprise a control member (24) movable over a first operative stroke to disengage said locking means (28) and a second operative stroke to disengage said angular positioning means (18,20), respectively.

7. Headrest according to claim 6, characterised in that said release means comprise a push-button (24) arranged at one side of said yelding body (2) and operable from outside to displace said slider member (15) from said engaged position towards said disengaged position.

8. Headrest according to claim 4, characterised in that said resilient thrust means comprise a pair of wire springs (21) having a first arm (22) reacting against said intermediate hollow body (10) and a second arm (28) forming said locking means.

9. Headrest according to claim 4, characterised in that said load-bearing framework (3) is formed by two half-shells (3a,3b) coupled to each other by snap-fit connecting elements (8) and defining therebetween a central seat (9) rotatably supported on said intermediate hollow body (10).
